# EUROPEAN PATENT APPLICATION

(11) **EP 1 860 339 A1**
(43) Date of publication of application: **28.11.2007**
(21) Application number: 06715377.5
(22) Date of filing: 08.03.2006
(51) Int. Cl.: F16C 35/02, F02B 27/02, F02M 35/104, F16C 43/02

(54) **SHAFT BODY HOLDING STRUCTURE, VARIABLE INTAKE VALVE, AND INTAKE DEVICE**

(30) Priority: 15.03.2005 JP 2005073389
(71) Applicant: AISIN SEIKI KABUSHIKI KAISHA, Kariya-shi, Aichi-ken 448-8650 (JP)
(72) Inventor: NAKAJIMA, Nobuhisa, -chome, Kariya-shi, Aichi 448-8650 (JP)
(74) Representative: TBK-Patent
(86) International application number: PCT/JP2006/304457
(87) International publication number: WO 2006/098200

(57) **Abstract**

There is provided a shaft-member holding construction which allows easy attachment of a shaft member. The construction includes a shaft member 4 supporting a rotary member 2, a bearing 5 for rotatably holding the shaft member 4, and a bearing holding member 31, 32 having an opening 31a, 32a capable of receiving the bearing 5 along an axial direction of the shaft member 4. The bearing holding member 31, 32 has a gap 31b, 32b capable of receiving the shaft member 4 from a radial direction relative to the axial direction.

## Description

### TECHNICAL FIELD

The present invention relates to a shaft-member holding construction for holding a shaft member which supports a rotary member, as well as to a variable intake valve using the holding construction and an intake apparatus using the variable intake valve.

### BACKGROUND ART

As a portion using this type of shaft-member holding construction, there is known e.g. a variable intake valve included in a multi-cylinder internal combustion engine. This variable intake valve is incorporated in a surge tank constituting an air intake system. Within the surge tank, intake passages communicated with respective particular cylinders are partitioned from each other by a partitioning wall. The variable intake valve is used for adjusting an aperture or an opening degree of a communication opening provided in the partitioning wall, thereby to adjust amounts of air to be supplied to the respective cylinders (see Patent Document 1 for example).

For its assembly, this variable intake valve is first attached to a valve holder, which then in turn is attached to the surge tank. The valve holder includes a flange portion for its attachment to the partitioning wall and a side wall portion which projects perpendicularly from an attaching surface of the flange portion. Further, at the center portion of the valve holder, there is provided a valve hole whose aperture is adjusted by the variable intake valve.

In the side wall portion described above, at opposed ends thereof relative to the longitudinal direction of the valve holder, there are provided shaft-member supporting holes for supporting the shaft member and bearings are mounted within these shaft-member supporting holes so that the shaft member is supported to these bearings.

With the conventional shaft-member holding construction described above, for the attachment of the shaft member, the shaft member needs to be inserted into the shaft-member supporting holes along their axial direction. For this reason, when attaching the shaft member and the valve body to the valve holder, this was done by e.g. inserting the shaft member into one of the shaft-member supporting holes along the extending direction of the shaft member, inserting the leading end of this shaft member into the other shaft-member supporting hole and then bolt-fixing the valve body to this shaft member.

Patent Document: Japanese Patent Application "Kokai" No. 2004-116357.

### DISCLOSURE OF THE INVENTION

### PROBLEM TO BE SOLVED BY INVENTION

In the case of the conventional shaft-member holding construction described above, when inserting the shaft member into the shaft-member supporting holes, it was needed first to significantly retract the shaft member along its axial direction. Therefore, if the shaft member had a significant length, the operation would require a large working space in the extending direction of the shaft member. Otherwise, i.e. when such space could not be obtained, the attaching operation of the shaft member was extremely difficult.

Further, as the valve body is attached to the shaft member after this shaft member has been inserted into the shaft-member supporting holes, additional working is needed in the attaching portions of the shaft member and the rotary member. As a result, the assembly process of the variable intake valve would be troublesome which led to increase in manufacture cost.

For reduction in the number of assembly steps, it is conceivable to form the shaft member integral with the valve body. However, if the shaft member is to be inserted into the shaft-member supporting hole along the longitudinal direction from the outside of the valve holder, there will occur interference between the valve body and the valve holder, thus preventing appropriate setting of the angle of insertion of the shaft member into the shaft-member supporting hole.

As described above, with the conventional shaft-member holding construction, there would occur inconvenience when a shaft member of a significant length or having various kinds of rotary members attached thereto was to be held.

The present invention has been made in view of the above-described problems of the art. The object of the invention is to provide a shaft-member holding construction, a variable intake valve using the holding construction and an intake apparatus using the variable intake valve, all of which allow attachment of various types of shaft members to be done easily.

### MEANS FOR ACHIEVING THE OBJECT

According to a first characterizing feature of the present invention, a shaft-member holding construction comprises:
a shaft member supporting a rotary member;
a bearing for rotatably holding said shaft member; and
a bearing holding member having an opening capable of receiving said bearing along an axial direction of said shaft member, said bearing holding member having a gap capable of receiving said shaft member from a radial direction relative to said axial direction.

With the above-described construction, the bearing holding member has a gap capable of receiving the shaft member from a radial direction relative to the axial direction. With this, there is eliminated the conventional necessity of inserting the shaft member along the axial direction, so that the attachment of the shaft member can be done easily. For instance, even when a rotary member is supported to the shaft member, it is no longer needed to temporarily retract this rotary member along the axial direction. Further, the shaft member often has a great length. If there is imposed restriction in the working space available in those portions where the shaft member is to be attached, especially along the extending direction of the shaft member, the attachment of the shaft member would otherwise be difficult, even if no rotary member is attached thereto. With the inventive construction, however, the attachment can be done from the radial direction relative to the axis of the shaft member. Therefore, the attachment operation can be done extremely smoothly.

According to a second characterizing construction of the present invention, said shaft member includes a chamfered portion at a portion thereof to be received by said bearing holding member.

With such chamfered portion provided in the shaft member at a portion thereof to be received by the bearing holding member, it becomes possible to reduce the width dimension of this shaft member. As a result, the width of the gap for receiving this shaft member can also be smaller, so that the bearing holding member can hold the bearing along substantially entire perimeter thereof. Consequently, it is possible to obtain a highly reliable bearing holding member.

Also, if the shaft member is rotated by a predetermined angle after insertion thereof into the gap of the bearing holding member, this can prevent inadvertent withdrawal of the shaft member from the gap. Hence, there is achieved a further advantage of temporary assembly of the shaft member being facilitated.

According to a third characterizing feature of the present invention, said gap is open on one side of the bearing holding member along the axial direction, and a wall portion is provided adjacent the other end of said gap opposite to said opening.

With the above construction, the gap is open on one side of the bearing holding member along the axial direction, and a wall portion is provided adjacent the other end of gap opposite to its opening side. This construction is advantageous for e.g. holding an extreme end portion of the shaft member by the bearing holding member. More particularly, the above construction facilitates the assembly of the shaft member and also prevents displacement of the once attached shaft member along its axial direction. Consequently, the shaft member can be held in an even more reliable manner.

According to a fourth characterizing feature of the present invention, the holding construction further comprises a gap closing member for closing said gap.

Due to the presence of the gap therein, the bearing holding member could otherwise suffer from correspondingly reduced rigidity, which may lead to reduction in the force for holding the shaft member and the bearing, hence, eventually to inadvertent withdrawal of the shaft member and/or the bearing from the radial direction. With the inventive construction above, however, with the presence of the gap closing member for closing the gap of the bearing holding member, such inadvertent withdrawal of the shaft member and/or the bearing from the radial direction may be avoided reliably.

According to a fifth characterizing feature of the present invention, the holding construction further comprises an external force applying member for coming into contact with the bearing holding member so as to prevent widening of said gap.

As described above, due to the presence of the gap therein, the bearing holding member could otherwise suffer from correspondingly reduced rigidity, which may lead to reduction in the force for holding the shaft member and the bearing, hence, eventually to inadvertent withdrawal of the shaft member or the bearing from the radial direction. With the inventive construction above, however, with the provision of an external force applying member for coming into contact with the bearing holding member so as to prevent widening of the gap, the rigidity of the bearing holding member can be enhanced. As a result, through prevention of the widening of the gap, the inadvertent withdrawal of the bearing and/or the shaft member can be prevented in an effective manner.

According to a sixth characterizing feature of the present invention, said shaft-member holding construction is attached to an opening formed in a partitioning wall which divides an inner space of a surge tank constituting an intake apparatus, and said gap closing member is a concave portion provided in said partitioning wall for accommodating said bearing holding member therein when said holding construction is attached to said partitioning wall.

With the above described inventive construction, a concave portion formed in a partitioning wall of a surge tank is provided as the gap closing member. With this, a part of the member to which the shaft holding construction is to be attached is utilized as the gap closing member. As a result, there is no need to provide a gap closing member separately, so that with the reduction in the number of components, cost reduction is made possible. At the same time, the shaft-member holding construction can reliably prevent inadvertent withdrawal of the bearing and/or the shaft member from the radial direction.

According to a seventh characterizing feature of the present invention, said shaft-member holding construction is attached to an opening formed in a partitioning wall which divides an inner space of a surge tank constituting an intake apparatus, and said external force applying member is a concave portion provided in said partitioning wall for accommodating said bearing holding member therein when said holding construction is attached to said partitioning wall.

With the above described inventive construction, a concave portion formed in a partitioning wall of a surge tank is provided as the external force applying closing member. With this, a part of the member to which the shaft holding construction is to be attached is utilized as the external force applying member. As a result, there is no need to provide an external force applying member separately, so that with the reduction in the number of components, cost reduction is made possible. At the same time, the shaft-member holding construction can reliably prevent inadvertent withdrawal of the bearing or the shaft member from the radial direction.

According to an eighth characterizing feature of the present invention, there is provided a variable intake valve to be attached to an opening formed in an partitioning wall for dividing an inner space of a surge tank constituting an intake apparatus, the intake valve comprising:
a valve body;
a shaft member supporting said valve body;
a bearing for rotatably holding said shaft member; and
a bearing holding member having an opening capable of receiving said bearing along an axial direction of said shaft member,
a gap provided in said bearing holding member, said gap being capable of receiving said shaft member from a radial direction relative to the axial direction; and
a valve holder having a communication hole within which said valve is rotatable, said valve holder also having said bearing holding member, said valve holder being attached to said opening of the partitioning wall.

With the above inventive construction, the above-described shaft-member holding construction is applied to a variable intake valve. With this, the attaching operation of the valve body to the valve holder can be effected in an extremely smooth manner. As a result, the manufacturing cost of the variable intake valve can be reduced.

According to a ninth characterizing feature of the present invention, an intake apparatus comprises:
a surge tank;
a partitioning wall for dividing an inner space of said surge tank into a first chamber and a second chamber;
a first intake manifold communicated with said first chamber;
a second intake manifold communicated with said second chamber; and
a variable intake valve attached to an opening formed in said partitioning wall;
   wherein said variable intake valve includes:
   a valve body;
   a shaft member supporting said valve body;
   a bearing for rotatably holding said shaft member; and
   a bearing holding member having an opening capable of receiving said bearing along an axial direction of said shaft member,
   a gap provided in said bearing holding member, said gap being capable of receiving said shaft member from a radial direction relative to the axial direction; and
   a valve holder having a communication hole within which said valve is rotatable, said valve holder also having said bearing holding member, said valve holder being attached to said opening of the partitioning wall.

With the above-described inventive construction, the variable intake valve which can be assembled easily is applied to an intake apparatus. Hence, the manufacturing cost of the variable apparatus can be reduced.

### BEST MODE OF EMBODYING THE INVENTION

A shaft-member retaining construction to which the present invention relates can be used in e.g. various portions of a vehicle engine. In this particular embodiment, the inventive holding construction is used in a variable intake valve of an air intake system included therein. Next, the construction will be described with reference to the accompanying drawings.

### (General Construction of Variable Intake Valve)

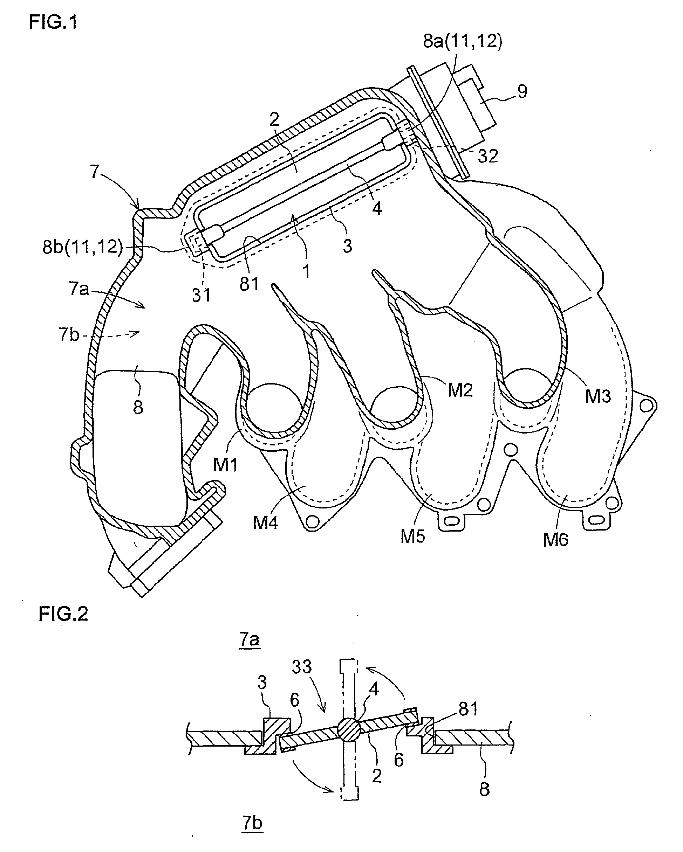

Fig. 1 shows a surge tank 7 to be connected to an intake port of an engine. This surge tank 7 is for use with a vertical six-cylinder engine. The inside of the tank 7 is divided into a first chamber 7a and a second chamber 7b by a partitioning wall 8. The first chamber 7a is communicated with intake manifolds M1, M2, M3 connected to three cylinders disposed on one side, whereas the second chamber 7b is communicated with intake manifolds M4, M5, M6 connected to further three cylinders disposed on the other side.

The partitioning wall 8 defines a communication opening 33 for communicating the first chamber 7a and the second chamber 7b to each other. The aperture or the opening degree of this communication hole 33 is adjusted in accordance with revolution of the engine. As the operational condition of the engine varies in many ways, it is difficult to constantly optimize an air intake amount to each cylinder or balance among air intake amounts for the respective cylinders, even with modification of the constructions of the engine and/or the surge tank 7. The communication opening 33 is provided for relieving such inconvenience occurring in the air intake. Normally, during an idling or a low speed rotation of the engine, the communication hole 33 is closed. Wherein, when the rotational speed of the engine exceeds a predetermined value, the communication opening 33 will be fully opened.

The aperture, or the opening degree, of the communication opening 33, is adjusted by means of a variable intake valve 1 (to be referred to simply as "valve 1", hereinafter). As shown in Fig. 1, this valve 1 includes an approximately rectangular valve body 2a, as a rotary member 2, and a shaft member 4 supporting this valve body 2a. The valve body 2a and the shaft member 4 can be formed integral with each other or can be an assembly of separately formed members. The shape of the valve body 2a is not limited to the approximately rectangular shape, but can instead be any other shape such as circular, oval, trapezoidal, square shapes.

Along the outer peripheral edge of the valve body 2a, there is provided a seal member 6 formed of e.g. rubber. This seal member 6 maintains a closed condition of the communication opening 33 when the valve 1 is under its closed posture. Incidentally, the seal member 6 can be provided instead to the communication opening 33.

The communication opening 33, as shown in Fig. 2, is provided in a valve holder 3. When this valve holder 3 is attached to an opening 81 formed in the partitioning wall 8, the first chamber 7a and the second chamber 7b can be communicated with each other via the communication opening 33. The attachment of the valve holder 3 to the partitioning wall 8 can be realized in various ways such as welding, screw-fastening, press-fitting, etc.

This valve holder 3 includes bearing holding members for rotatably supporting the shaft member 4. The shaft member 4 is driven to rotate by means of an actuator 9 provided outside the surge tank 7. Fig. 2 illustrates opening/closing conditions of the valve 1. During a low speed engine rotation, the communication opening 33 is closed as shown by solid lines in the figure. Whereas, during a high speed engine rotation, the communication opening 33 is fully opened as shown by two-dot lines in the same figure.

### (Shaft-Member Holding Construction)

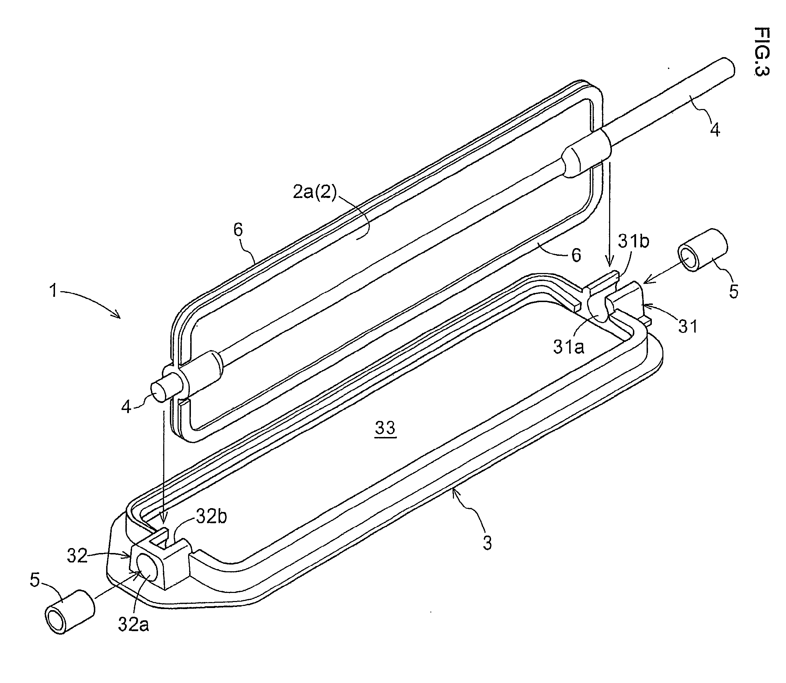

The shaft-member holding construction according to the present invention is shown in details in Figs. 3 through 5.

In the instant embodiment, the valve member 2a, as the rotary member 2, and the shaft member 4 for supporting the valve body 2a are formed integral with each other. This shaft member 4 is supported by the bearing holding members provided adjacent opposed longitudinal ends of the valve holder 3. Between the shaft member and each bearing holding member, there is provided a bearing 5 for supporting the shaft member 4 while allowing smooth rotation of this shaft member 4.

According to the essential spirit of the present invention, the shaft member 4 can be attached to the bearing holding members from a radial direction relative to the axial direction of the shaft member 4. To this end, as shown in Fig. 3, as the bearing holding members, there are employed two types of holding members, i.e. a first bearing holding member 31 and a second bearing holding member 32. The first bearing holding member 31 has, at its top portion, a gap 31 b extending over the entire length of this first bearing holding member 31 along the axial direction of the shaft member 4. On the other hand, the second bearing holding member 32 has, at its top portion, a gap 32b extending over a limited part of the length of this second bearing holding member 32 along the axial direction of the shaft member 4. With both of these gaps 31b, 32b, their width is set slighter greater than the outer diameter of the shaft member 4.

With the above-described construction, to the first bearing holding member 31, the shaft member can be attached by being inserted therethrough. A component having such shaft member 4 having a great length is often used as variety of mechanical components, not limited in its use to the variable intake valve. Yet, with the provision of the inventive holding construction for the shaft member 4, irrespectively of the length of the shaft member 4 or the size etc. of the rotary member 2 attached to the shaft member 4, the shaft member 4 can be attached from the radial direction of the bearing holding member. Accordingly, the attachment of various kinds of rotary members 2 can be effected very easily.

On the other hand, the gap 32b provided in the second bearing holding member 32 is open to one side of this second bearing holding member 32 along the axial direction. That is, the gap 32b is not to be provided at a portion of the second bearing holding member 32. In this case, during attachment of the shaft member 4, the position where the shaft member 4 is brought nearby will be restricted so as to prevent an end of the shaft member 4 from interfering with the top of the second bearing holding member 32. However, as the portion of the top portion of the second bearing holding member 32 extends continuously or un-interruptedly to form an annular shape, this bearing holding member can have a sufficient strength.

Incidentally, in case at least one of the shaft member 4 and the bearing holding members 31, 32 is formed of an elastically deformable material such as a resin, the width of the gaps 31b, 82b can be set slightly smaller than the outer diameter of the shaft member 4 also. Namely, in this case, the shaft member 4 will be pressed against the gaps 31b, 32b so as to cause temporary elastic deformation in the at least one of the shaft member 4 and the bearing holding members 31, 32, the shaft member 4 can be inserted into the gaps 31b, 32b.

According to the above-described construction, as the width of the gaps 31b, 32b is slightly smaller than the outer diameter of the shaft member 4, it is possible to prevent inadvertent withdrawal of the shaft member 4 from the gaps 31b, 32b in a reliable manner. Hence, there is achieved such advantage as the temporary assembly of the shaft member being facilitated.

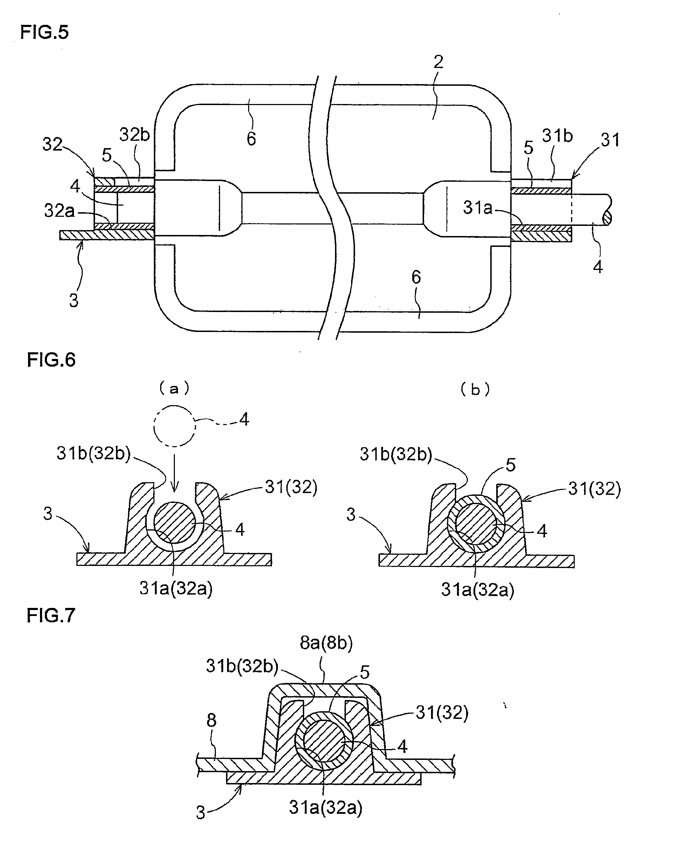

The first bearing holding member 31 and the second bearing holding member 32, as shown in Fig. 6, respectively include a first opening 31a and a second opening 31b both capable of receiving the respective bearings 5 along the axial direction of the shaft member 4. The bearing 5 exhibits a substantially cylindrical shape. The inner diameter dimensions of these first and second openings 31a, 32a are set slightly smaller than the outer diameter of the bearing 5. With this construction, after the shaft member 4 is inserted into the first bearing holding member 31 and the second bearing holding member 32 (Fig. 6 (a)), the bearings 5 can be fitted into the first opening 31 a and the second opening 32a (Fig. 6 (b)); therefore, the bearings 5 can be held firmly.

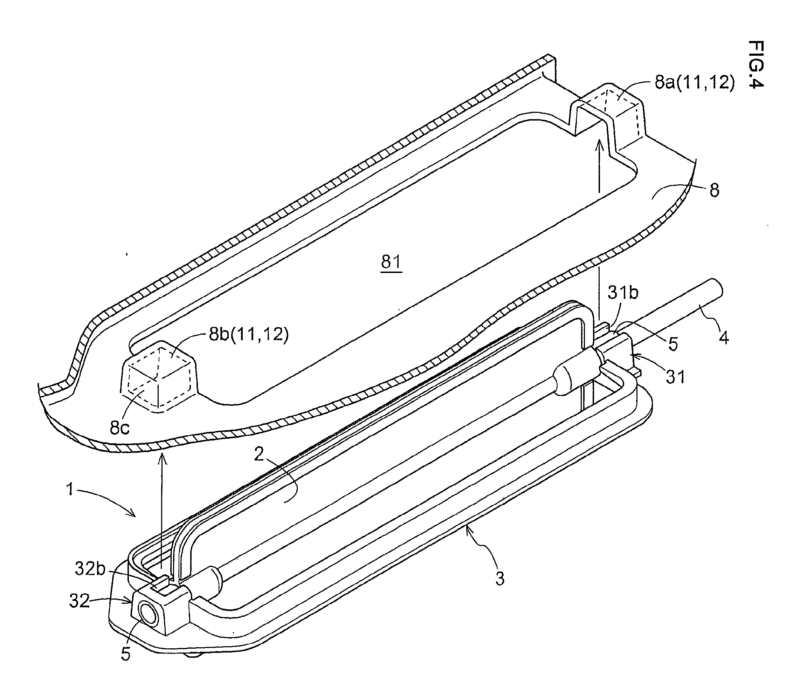

To the surge tank 7 shown in Fig. 1, a lid member (not shown) will be attached from a near side in the direction normal to the plane of Fig. 1. At portions of this lid member corresponding to the partitioning wall 8, as shown in Fig. 4, there are provided a first concave portion 8a and a second concave portion 8b for covering the bearing holding members. These concave portions provide following functions for example.

First, the first concave portion 8a functions as a gap closing member 11 for closing the gap 31b of the first bearing holding member 31. Namely, due to the presence of the gap 31b therein, the first bearing holding member 31 suffers some reduction in its rigidity, which can lead to some reduction in its holding force for holding the shaft member 4. As a result, there is the risk of the shaft member 4 or the bearings 5 being withdrawn inadvertently in that direction. With the above-described construction, however, as the gap 31b is closed with using the first concave portion 8a of the lid member, such inadvertent withdrawal of the bearings 5 and/or the shaft member 4 can be prevented reliably. Moreover, as the side of the partitioning wall 8 to which the variable intake valve 1 is to be attached is adapted to function as the gap closing member 11, there is no necessity of providing such gap closing member 11 separately. Consequently, the number of components can be reduced and the cost reduction is made possible.

Also, as shown in Fig. 7, it is possible to adapt the first concave portion 8a to contact an inclined outer face of the first bearing holding member 31, thus the first concave portion providing a function for preventing widening of the gap 31 b. Namely, this first concave portion 31 b will be adapted to function as an external force applying member 12 as this first concave portion 31b comes into contact with respective portions of the first bearing holding member 31 present across the gap 31b so as to prevent further widening or narrowing therebetween.

With the above-described construction, it is possible to compensate for the reduction in the rigidity of the first bearing holding member 31, thereby effectively preventing inadvertent withdrawal of the bearing 5 and/or the shaft member 4 from the gap 31b. In addition, as the side of the partitioning wall 8 to which the variable intake valve 1 is to be attached is adapted to function as the external force applying member 12, there is no need of providing such external force applying member 12 as a separate additional component. Consequently, the number of components can be reduced and the cost reduction is made possible.

These functions are provided also by the other, i.e. the second concave portion 8b. However, the second concave portion 8b provides the following additional functions also.

As shown in Fig. 4, the second concave portion 8b is configured to cover also the end portion of the second bearing holding portion 32 relative to the axial direction of the shaft member 4. In this case, the end portion of the shaft member 4 is contained within the second bearing holding portion 32, when the second concave portion 8b forms a wall portion 8c adjacent the end face of the end of the shaft member 4. As a result, it is possible to effectively prevent inadvertent axial displacement of the shaft member 4. With this arrangement, it becomes possible to obtain a shaft-member holding construction having high reliability which allows easy attachment of the shaft member 4 from the radial direction and allows, at the same time, simultaneous prevention of inadvertent withdrawal of the shaft member 4 and looseness thereof in the axial direction.

Incidentally, the first concave portion 8a and the second concave portion 8b need not necessarily be provided in the lid member for the surge tank 7. Instead, these can be provided as separately prepared members which are to be attached to the bearing holding members. In this case, these separately prepared members may be adapted to act as the gap closing member 11 and/or the external force applying member 12.

### [Alternative Embodiment 1]

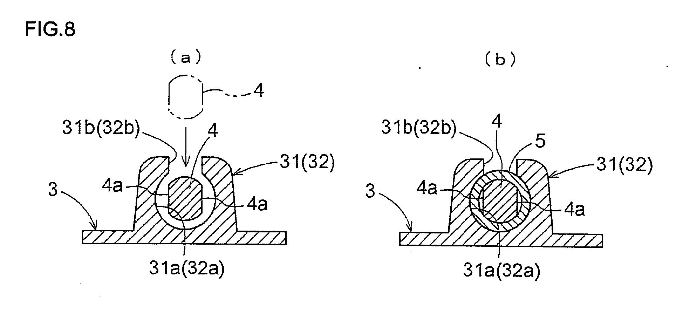

In the foregoing embodiment, the shaft member 4 has been described as having simply a circular cross section. Instead, as shown in Fig. 8, the shaft member 4 can include chamfered portions 4a at portions thereof to be received by the bearing holding members 31, 32.

With the provision of such chamfered portions 4a, it becomes possible to reduce the outer diameter dimension of the shaft member 4 at these portions. As a result, the gap 31b and the gap 32b can be formed even smaller, so that the areas thereof for holding the bearings 5 can extend along substantially entire perimeter thereof, thereby further enhancing the holding effects for the shaft member 4 and the bearings 5.

Further, if the shaft member 4 is rotated for a predetermined angle after this member 4 has been inserted into the gaps 31b, 32b of the bearing holding members 31, 32, this will allow reliable prevention of inadvertent withdrawal of the shaft member 4 from the gaps 31b, 32b. Hence, there is achieved such an advantage as the temporary assembly of the shaft member being facilitated.

Incidentally, the manner of forming the chamfered portions 4a is not limited to the one shown in Fig. 8 in which flattened faces are provided at two portions or sides. Instead, only one side can be chamfered. Further alternatively, the shaft member 4 can have a polygonal or oval cross sectional shape.

### [Alternative Embodiment 2]

In the foregoing embodiment, the gaps 31b, 32b are provided at the top portions of the respective bearing holding members. The invention is not limited to such construction. Instead, these gaps 31b, 32b can be provided in e.g. lateral faces of the bearing holding members with an offset from each other. By appropriately selecting the forming positions of the gas 31b, 32b, it becomes possible to facilitate insertion of the shaft member 4 when it is desired to insert this member 4 from some particular direction and also to effectively prevent inadvertent withdrawal of the shaft member 4 at a portion where such inadvertent withdrawal of the shaft member 4 would otherwise tend to occur in some particular direction.

### [Alternative Embodiment 3]

In the foregoing embodiment, the inventive shaft-member holding construction is applied to a variable intake valve for use in an automobile. The invention is applicable also as holding constructions for any other shaft member.

### INDUSTRIAL APPLICABILITY

The present invention is applicable to a shaft-member holding construction for holding a shaft member which supports a rotary member, as well as to a variable intake valve using the holding construction and an intake apparatus using the variable intake valve, etc.

### BRIEF DESCRIPTION OF THE DRAWINGS

[Fig. 1] is an explanatory view showing an example of a shaft-member holding construction according to the present invention,
[Fig. 2] is an explanatory view showing manners of movements of a shaft member and a rotary member,
[Fig. 3] is an exploded perspective view showing a manner of assembly of the shaft member and the rotary member,
[Fig. 4] is a perspective view showing an assembled condition of the shaft member and the rotary member,
[Fig. 5] is a section view showing an attachment condition of the shaft member in details,
[Fig. 6] is an explanatory view showing a manner of attachment of the shaft member to a bearing holding member,
[Fig. 7] is a section view showing an embodiment including an external force applying member, and
[Fig. 8] is a section view showing an embodiment including a chamfered portion.

### DESCRIPTION OF REFERENCE MARKS

- 2: rotary member
- 4: shaft member
- 4a: chamfered portion
- 5: bearing
- 8c: wall portion
- 11: gap closing member
- 12: external force applying member
- 31: first bearing holding member (bearing holding member)
- 31 a: first opening (opening)
- 31b: gap
- 32: second bearing holding member (bearing holding member)
- 32a: second opening (opening)
- 32b: gap

## Claims

1. A shaft-member holding construction comprising:
a shaft member supporting a rotary member;
a bearing for rotatably holding said shaft member; and
a bearing holding member having an opening capable of receiving said bearing along an axial direction of said shaft member, said bearing holding member having a gap capable of receiving said shaft member from a radial direction relative to said axial direction.

2. The shaft-member holding construction according to claim 1, wherein said shaft member includes a chamfered portion at a portion thereof to be received by said bearing holding member.

3. The shaft-member holding construction according to claim 1, wherein said gap is open on one side of the bearing holding member along the axial direction, and a wall portion is provided adjacent the other end of said gap opposite to said opening.

4. The shaft-member holding construction according to claim 1, further comprising a gap closing member for closing said gap.

5. The shaft-member holding construction according to claim 1, further comprising an external force applying member for coming into contact with the bearing holding member so as to prevent widening of said gap.

6. The shaft-member holding construction according to claim 4, wherein said shaft-member holding construction is attached to an opening formed in a partitioning wall which divides an inner space of a surge tank constituting an intake apparatus, and said gap closing member is a concave portion provided in said partitioning wall for accommodating said bearing holding member therein when said holding construction is attached to said partitioning wall.

7. The shaft-member holding construction according to claim 5, wherein said shaft-member holding construction is attached to an opening formed in a partitioning wall which divides an inner space of a surge tank constituting an intake apparatus, and said external force applying member is a concave portion provided in said partitioning wall for accommodating said bearing holding member therein when said holding construction is attached to said partitioning wall.

8. A variable intake valve to be attached to an opening formed in an partitioning wall for dividing an inner space of a surge tank constituting an intake apparatus, the intake valve comprising:
a valve body;
a shaft member supporting said valve body;
a bearing for rotatably holding said shaft member; and
a bearing holding member having an opening capable of receiving said bearing along an axial direction of said shaft member,
a gap provided in said bearing holding member, said gap being capable of receiving said shaft member from a radial direction relative to the axial direction; and
a valve holder having a communication hole within which said valve is rotatable, said valve holder also having said bearing holding member, said valve holder being attached to said opening of the partitioning wall.

9. An intake apparatus comprising:
a surge tank;
a partitioning wall for dividing an inner space of said surge tank into a first chamber and a second chamber;
a first intake manifold communicated with said first chamber;
a second intake manifold communicated with said second chamber; and
a variable intake valve attached to an opening formed in said partitioning wall;
wherein said variable intake valve includes:
a valve body;
a shaft member supporting said valve body;
a bearing for rotatably holding said shaft member; and
a bearing holding member having an opening capable of receiving said bearing along an axial direction of said shaft member,
a gap provided in said bearing holding member, said gap being capable of receiving said shaft member from a radial direction relative to the axial direction; and
a valve holder having a communication hole within which said valve is rotatable, said valve holder also having said bearing holding member, said valve holder being attached to said opening of the partitioning wall.

## Amended claims

### Amended claims under Art. 19.1 PCT

**1.** (amended) A shaft-member holding construction comprising:
a shaft member supporting a rotary member;
a bearing for rotatably holding said shaft member;
a bearing holding member having an opening capable of receiving said bearing along an axial direction of said shaft member, said bearing holding member having a gap capable of receiving said shaft member from a radial direction relative to said axial direction; and
wherein said shaft member includes a chamfered portion at a portion thereof to be received by said bearing holding member.

**2.** (canceled)

**3.** The shaft-member holding construction according to claim 1, wherein said gap is open on one side of the bearing holding member along the axial direction, and a wall portion is provided adjacent the other end of said gap opposite to said opening.

**4.** The shaft-member holding construction according to claim 1, further comprising a gap closing member for closing said gap.

**5.** The shaft-member holding construction according to claim 1, further comprising an external force applying member for coming into contact with the bearing holding member so as to prevent widening of said gap.

**6.** The shaft-member holding construction according to claim 4, wherein said shaft-member holding construction is attached to an opening formed in a partitioning wall which divides an inner space of a surge tank constituting an intake apparatus, and said gap closing member is a concave portion provided in said partitioning wall for accommodating said bearing holding member therein when said holding construction is attached to said partitioning wall.

**7.** The shaft-member holding construction according to claim 5, wherein said shaft-member holding construction is attached to an opening formed in a partitioning wall which divides an inner space of a surge tank constituting an intake apparatus, and said external force applying member is a concave portion provided in said partitioning wall for accommodating said bearing holding member therein when said holding construction is attached to said partitioning wall.

**8.** A variable intake valve to be attached to an opening formed in an partitioning wall for dividing an inner space of a surge tank constituting an intake apparatus, the intake valve comprising:
a valve body;
a shaft member supporting said valve body;
a bearing for rotatably holding said shaft member; and
a bearing holding member having an opening capable of receiving said bearing along an axial direction of said shaft member,
a gap provided in said bearing holding member, said gap being capable of receiving said shaft member from a radial direction relative to the axial direction; and
a valve holder having a communication hole within which said valve is rotatable, said valve holder also having said bearing holding member, said valve holder being attached to said opening of the partitioning wall.

**9.** An intake apparatus comprising:
a surge tank;
a partitioning wall for dividing an inner space of said surge tank into a first chamber and a second chamber;
a first intake manifold communicated with said first chamber;
a second intake manifold communicated with said second chamber; and
a variable intake valve attached to an opening formed in said partitioning wall;
wherein said variable intake valve includes:
a valve body;
a shaft member supporting said valve body;
a bearing for rotatably holding said shaft member; and
a bearing holding member having an opening capable of receiving said bearing along an axial direction of said shaft member,
a gap provided in said bearing holding member, said gap being capable of receiving said shaft member from a radial direction relative to the axial direction; and
a valve holder having a communication hole within which said valve is rotatable, said valve holder also having said bearing holding member, said valve holder being attached to said opening of the partitioning wall.
